# EUROPÄISCHE PATENTANMELDUNG

(11) **EP 3 804 885 A1**
(43) Veröffentlichungstag der Anmeldung: **14.04.2021**
(21) Anmeldenummer: 19202669.8
(22) Anmeldetag: 11.10.2019
(51) Int. Cl.: B22F 3/105, B33Y 10/00, B33Y 30/00, B33Y 70/00

(54) **VERFAHREN ZUR HERSTELLUNG EINES METALLISCHEN BAUTEILS, DAS EINEN ABSCHNITT MIT HOHEM ASPEKTVERHÄLTNIS AUFWEIST**

(71) Anmelder: Heraeus Additive Manufacturing GmbH, 63450 Hanau (DE)
(72) Erfinder: STOLPE, Moritz, 63450 Hanau (DE)
(74) Vertreter: Haggenmüller, Christian

(57) **Zusammenfassung**

Die vorliegende Erfindung betrifft ein Verfahren zur Herstellung eines metallischen Formkörpers, der Formkörper umfassend (i) ein metallisches Substrat und (ii) einen auf dem metallischen Substrat vorliegenden Abschnitt, der ein hohes Aspektverhältnis aufweist und eine amorphe Metalllegierung enthält, wobei der die amorphe Metalllegierung enthaltende Abschnitt mit hohem Aspektverhältnis über eine additive Fertigung auf das metallische Substrat aufgebracht wird.

## Beschreibung

Die vorliegende Erfindung betrifft ein Verfahren zur Herstellung eines metallischen Formkörpers, der ein metallisches Substrat und einen auf dem Substrat aufgebrachten Abschnitt mit hohem Aspektverhältnis umfasst.

Amorphe Metalle weisen vorteilhafte mechanische Eigenschaften wie z.B. eine hohe Festigkeit und Härte auf. Außerdem zeigen sie eine hohe Korrosionsbeständigkeit. Daher sind amorphe Metalle interessante Materialien für die Herstellung von Bauteilen, bei denen diese Eigenschaften relevant sind.

So kann es beispielsweise für Bauteile, die zumindest abschnittsweise dünnwandige Bereiche und/oder Bereiche mit hohem Aspektverhältnis aufweisen, vorteilhaft sein, wenn diese Abschnitte ein amorphes Metall enthalten. In Abhängigkeit von der Anwendung des Bauteils kann durch die Anwesenheit eines amorphen Metalls das mechanische Verhalten der dünnwandigen Abschnitte gegebenenfalls verbessert werden, insbesondere wenn diese Bereiche höheren mechanischen Belastungen ausgesetzt sind.

WO 2012/031022 A2 beschreibt die Herstellung eines Formkörpers mit hohem Aspektverhältnis, der ein amorphes Metall enthält. Die Herstellung erfolgt durch thermoplastisches Formen. Dabei wird ein amorpher, zu formender Metallrohling auf eine Temperatur, die zwischen der Glasübergangstemperatur und der Kristallisationstemperatur liegt, erwärmt und durch Pressen in die gewünschte Form überführt. Thermoplastisches Pressen erfordert die Verwendung einer NegativForm, was wiederum die Herstellung komplexer Geometrien erschwert.

Ein Bauteil, das einen dünnwandigen Abschnitt mit hohem Aspektverhältnis aufweist, ist beispielsweise der sogenannte Flexspline eines Harmonic-Drive-Getriebes. Weitere beispielhafte Bauteile mit einem dünnwandigen und ein hohes Aspektverhältnis aufweisenden Abschnitt sind Werkzeuge, die ein dünnes Blatt oder eine dünne Klinge aufweisen (z.B. ein Skalpell).

WO 2015/156797 A1 beschreibt ein Harmonic-Drive-Getriebe, dessen Flexspline ein amorphes Metall enthält. Die Herstellung des amorphen metallischen Flexspline erfolgt über ein thermoplastisches Formen oder ein Gießen.

US 2016/339509 A1 beschreibt die Herstellung eines Formkörpers, der eine amorphe Metalllegierung enthält, durch Gießen, wobei eine geschmolzene Metalllegierung in einen Spalt, der zwischen zwei zueinander beweglichen Substraten vorliegt, gegossen und schnell abgekühlt wird.

Bei amorphen Bauteilen, die ein hohes Aspektverhältnis (d.h. einen hohen Wert für das Verhältnis von Höhe zu Materialdicke) aufweisen, ist die Herstellung über ein Gussverfahren sehr problematisch. Um sicherzustellen, dass die Schmelze der verwendeten Legierung amorph erstarrt, muss eine ausreichend hohe Abkühlrate realisiert werden. Andererseits sollte die Schmelze vor ihrer Erstarrung die Form bereits vollständig ausgefüllt haben. In der Praxis zeigt sich aber, dass viele Legierungen diesen beiden Anforderungen (d.h. amorphe Erstarrung bei vollständiger Ausfüllung der Gussform) nicht genügen. Im Zuge der schnellen Abkühlung kommt es zu einem rasanten Viskositätsanstieg der Schmelze, wodurch das Füllen von Strukturen mit hohem Aspektverhältnis (z.B. dünnwandige Strukturen oder enge Kanäle) erschwert.

Die Herstellung amorpher metallischer Formkörper über ein additives Fertigungsverfahren ist bekannt.

WO 2008/039134 A1 beschreibt die Herstellung metallischer amorpher Formkörper über ein Pulverbett-basiertes Strahlschmelzverfahren.

US 2018/257141 A1 beschreibt die Herstellung eines metallischen Flexsplines über ein additives Fertigungsverfahren. Das gesamte Bauteil wird durch die additive Fertigung hergestellt. Da auch die relativ voluminöse und massiv ausgestaltete Bodenplatte der Flexspline über das additive Fertigungsverfahren hergestellt wird, ist die Herstellung der Flexspline zeit- und kostenintensiv.

DE 10 2008 012 064 A1 beschreibt ein Verfahren zur Herstellung eines mehrteiligen Formkörpers. In diesem Verfahren wird zunächst ein Substrat oder Grundkörper durch Gießen oder Zerspanen hergestellt. Anschließend wird auf einer ersten Oberfläche des Grundkörpers ein erster Abschnitt über ein additives Herstellungsverfahren aufgebracht, der Grundkörper gedreht und auf einer zweiten Oberfläche des gedrehten Grundkörpers ein weiterer Abschnitt über eine additive Fertigung aufgebracht. Die Verwendung amorpher Metalle für die additiv gefertigten Abschnitte wird nicht erwähnt.

WO 2018/148010 A1 beschreibt ein Verfahren zur Herstellung einer Komponente eines Turbinenmotors, wobei auf einem geschmiedeten Substrat bzw. Grundkörper über ein additives Fertigungsverfahren ein ringförmiger bzw. konisch geformter Abschnitt aufgebracht wird. Die Verwendung amorpher Metalle für die additiv gefertigten konischen Abschnitte wird nicht erwähnt.

EP 2 957 367 A1 beschreibt ein Verfahren zur Herstellung eines Formkörpers, wobei zunächst ein Substratkörper bereit gestellt wird und auf diesem Substratkörper durch additive Fertigung ein weiterer Abschnitt hinzugefügt wird, so dass der finale Formkörper erhalten wird.

Eine Aufgabe der vorliegenden Erfindung ist die Herstellung eines metallischen Formkörpers, der einen Abschnitt mit hohem Aspektverhältnis aufweist, durch ein Verfahren, das möglichst effizient (z.B. zeitsparend und kosteneffizient) durchgeführt werden kann und zu einem Bauteil mit vorteilhaften mechanischen Eigenschaften führt.

Gelöst wird die Aufgabe durch ein Verfahren zur Herstellung eines metallischen Formkörpers, der Formkörper umfassend (i) ein metallisches Substrat und (ii) einen auf dem metallischen Substrat vorliegenden Abschnitt, der ein hohes Aspektverhältnis aufweist und eine amorphe Metalllegierung enthält,
wobei der die amorphe Metalllegierung enthaltende Abschnitt mit hohem Aspektverhältnis über eine additive Fertigung auf das metallische Substrat aufgebracht wird.

Bevorzugt wird das metallische Substrat über ein nicht-additives metallurgisches Verfahren hergestellt.

Das nicht-additive metallurgische Verfahren ist beispielsweise ein Gießen, ein Zerspanen, ein thermoplastisches Formen oder ein pulvermetallurgisches Verfahren. Beispielhafte pulvermetallurgische Verfahren zur Herstellung des metallischen Substrats sind Pressen (z.B. ein Heißpressen oder ein isostatisches Pressen, insbesondere ein heißisostatisches Pressen (HIP)), Metallpulverspritzgießen und/oder Sintern. Das nicht-additive metallurgische Verfahren kann beispielsweise auch mindestens zweistufig sein und zwei oder mehr der oben genannten Verfahren umfassen. Beispielsweise umfasst die Herstellung des metallischen Substrats ein Gießen und nachfolgend ein thermoplastisches Formen.

Die Herstellung des metallischen Substrats durch ein herkömmliches metallurgisches Verfahren (z.B. Gießen) anstelle einer additiven Fertigung führt zu einer Zeiteinsparung und macht damit auch das gesamte Verfahren kosteneffizienter. Da andererseits der ein hohes Aspektverhältnis aufweisende Abschnitt des Formkörpers durch eine additive Fertigung unter Verwendung einer amorph erstarrenden Metalllegierung hergestellt wird, lassen sich amorphe Strukturen mit hohem Aspektverhältnis, z.B. dünnwandige Hohlkörper, realisieren, die sich durch konventionelle Verfahren (z.B. Gussverfahren) nicht herstellen lassen. Durch die Anwesenheit der amorphen Metalllegierung in dem Abschnitt mit hohem Aspektverhältnis weist dieser auch für den Fall einer geringen Wandstärke gute mechanische Eigenschaften, insbesondere eine hohe Elastizität, auf.

Das metallische Substrat kann ein elementares Metall und/oder eine Metalllegierung enthalten. Die Auswahl geeigneter elementarer Metalle oder Metalllegierungen kann der Fachmann unter Berücksichtigung der geplanten Verwendung des Formkörpers aufgrund seines allgemeinen Fachwissens vornehmen.

Im Rahmen der vorliegenden Erfindung umfasst der Begriff "Metall" sowohl ein elementares Metall wie auch eine Metalllegierung.

Das metallische Substrat kann ein amorphes Metall (insbesondere eine amorphe Metalllegierung) und/oder ein kristallines Metall (in Form eines elementaren Metalls oder einer Metalllegierung) enthalten. Auch ist es im Rahmen der vorliegenden Erfindung möglich, dass das metallische Substrat eine amorphe Metalllegierung enthält, die als Matrix fungiert und in der ein kristallines Metall dispergiert ist.

Beispielsweise ist das metallische Substrat aus Aluminium oder einer Aluminiumlegierung, Stahl, Titan oder einer Titanlegierung gefertigt.

Die konkrete Form des metallischen Substrats hängt von der geplanten Verwendung des Formkörpers ab. Beispielsweise liegt das metallische Substrat des Formkörpers in Form einer Platte (z.B. einer Bodenplatte eines Flexspline oder eines Gehäuses), eines Zahnkranzes, eines Gehäuses oder eines Schneidebereichs eines Fräskopfes vor. Bei dem Substrat kann es sich beispielsweise auch um einen Teil eines medizinischen Bestecks, eines chirurgischen Instruments (z.B. eines Skalpells) oder einer Pinzette handeln.

Vor dem Aufbringen des Abschnitts mit hohem Aspektverhältnis über eine additive Fertigung kann das metallische Substrat optional noch einer Oberflächenbehandlung unterzogen werden. Beispielsweise kann eine Beschichtung eines Metalls aufgebracht werden, das die Anhaftung der amorphen Metalllegierung auf dem Substrat verbessert.

Das metallische Substrat fungiert als Träger, auf dem über eine additive Fertigung ein Abschnitt aufgebracht wird, der ein hohes Aspektverhältnis aufweist und eine amorphe Metalllegierung enthält. Das metallische Substrat ist Teil des mit dem erfindungsgemäßen Verfahren herzustellenden Formkörpers.

Geeignete additive Fertigungsverfahren zur Herstellung metallischer amorpher Strukturen sind dem Fachmann bekannt. Beispielsweise ist das additive Fertigungsverfahren ein Pulverbett-basiertes Strahlschmelzen, ein Auftragsschweißen (z.B. ein Pulver- oder Draht-Auftragsschweißen), ein Liquid-Metal-Jetting, ein Extrusionsverfahren oder ein Binder-Jetting. Additive Fertigungsverfahren sind beispielsweise auch in der Norm EN ISO/ASTM 52921:2017 zusammengefasst. In einer bevorzugten Ausführungsform erfolgt die additive Fertigung des Abschnitts mit hohem Aspektverhältnis durch ein Pulverbett-basiertes Laser- oder Elektronenstrahlschmelzen. Die additive Fertigung amorpher metallischer Formkörper durch ein Pulverbett-basiertes Strahlschmelzen beschreiben beispielsweise L. Löber et al., Materials Today, Vol. 16, Jan./Feb. 2013, S. 37 ff.

In dem additiven Fertigungsverfahren wird der Abschnitt mit hohem Aspektverhältnis auf Basis der vorgegebenen CAD-Daten Schicht für Schicht aufgebaut. Beispielsweise wird bei einem Pulverbett-basierten Laser- oder Elektronenstrahlschmelzen ein metallisches Substrat (das zuvor bevorzugt durch ein nicht-additives metallurgisches Verfahren hergestellt wurde) in den Bauraum einer entsprechenden Vorrichtung eingebracht und optional durch geeignete Maßnahmen in dem Bauraum fixiert (z.B. durch ein das metallische Substrat umgebendes Pulverbett); Pulverschichten der Metalllegierung werden nacheinander aufgetragen, wobei die erste Pulverschicht auf einer Oberfläche des metallischen Substrats aufgetragen wird; in jeder aufgebrachten Pulverschicht wird die Metalllegierung in den Bereichen, die den Abschnitt mit hohem Aspektverhältnis (z.B. die Wand des Hohlkörpers) bilden, durch Einwirkung des Laser- oder Elektronenstrahls aufgeschmolzen und erstarrt anschließend zumindest teilweise amorph.

Geeignete Metalllegierungen, die in einem additiven Fertigungsverfahren amorph erstarren können, sind dem Fachmann bekannt.

Beispielsweise ist die amorphe Metalllegierung eine Übergangsmetall-basierte Legierung, eine Al-basierte Legierung oder eine Mg-basierte Legierung. Die Übergangsmetall-basierte Legierung ist beispielsweise eine Zr-basierte Legierung, eine Cu-basierte Legierung, eine Fe-basierte Legierung, eine Ti-basierte Legierung, eine Ni-basierte Legierung oder eine Edelmetall-basierte Legierung (z.B. eine Pt- oder Pd-basierte Legierung). Eine Zr-basierte Legierung ist eine Legierung, die als Hauptbestandteil (in Atom%) Zr enthält. Mit anderen Worten: In einer Zr-basierten Legierung ist Zr das Element, das in der höchsten Konzentration, ausgedrückt in Atom%, vorliegt. Gleiches gilt auch für die anderen der oben genannten Legierungen. So ist z.B. eine Cu-basierte Legierung eine Legierung, deren Hauptbestandteil (in Atom%) Kupfer ist.

Übersichtsdarstellungen zu amorphen Metalllegierungen finden sich beispielsweise in folgenden Publikationen:
- "Bulk Metallic Glasses - An Overview", Ed.: M. Miller und P. Liaw, Springer, S. 2-17 und 210-222;
- A.L. Greer, Materials Today, Jan-Feb 2009, Vol. 12, S. 14-22;
- A. Inoue et al., Materials, 2010, 3, S. 5320-5339.

Beispielhafte Kombinationen von Elementen in amorph erstarrenden Metalllegierungen sind Folgende:
- Späte Übergangsmetalle und Nichtmetalle, wobei das späte Übergangsmetall die Basis darstellt, beispielsweise Ni-P, Pd-Si, Au-Si-Ge, Pd-Ni-Cu-P, Fe-Cr-Mo-P-C-B
- Frühe und späte Übergangsmetalle, wobei beide Metalle die Basis darstellen können, wie z.B. Zr-Cu, Zr-Ni, Ti-Ni, Zr-Cu-Ni- Al, Zr-Ti-Cu-Ni-Be
- Metalle aus Gruppe B mit Seltenerdmetalle, wobei das Metall B die Basis darstellt, wie z.B. Al-La, Al-Ce, Al-La-Ni-Co, La-(Al/Ga)-Cu-Ni
- Metalle aus Gruppe A mit späten Übergangsmetallen, wobei das Metall A die Basis darstellt, wie z.B. Mg-Cu, Ca-Mg-Zn, Ca-Mg-Cu

Die Übergangsmetall-basierte Legierung kann neben ein oder mehreren metallischen Legierungselementen optional noch ein oder mehrere Metalloide (z.B. B, Si, Ge, As, Sb oder Te oder eine Kombination aus mindestens zwei dieser Elemente) und/oder ein oder mehrere nicht-metallische Elemente (z.B. P oder S) als Legierungselemente enthalten.

Beispielsweise kann die amorphe Metalllegierung eine Zr-Cu-Al-Nb-Legierung sein. Bevorzugt weist diese Zr-Cu-Al-Nb-Legierung außer Zirkon zusätzlich 23,5 - 24,5 Gew. % Kupfer, 3,5 - 4,0 Gew. % Aluminium sowie 1,5 - 2,0 Gew. % Niob auf, wobei sich die Gewichtsanteile zu 100 Gew. % ergänzen. Kommerziell erhältlich ist die letztgenannte Legierung unter dem Namen AMZ4® von der Heraeus Deutschland GmbH. In einer weiteren beispielhaften Ausführungsform kann die amorphe Metalllegierung die Elemente Zirkon, Titan, Kupfer, Nickel und Aluminium enthalten. Bevorzugte Legierungszusammensetzungen sind beispielsweise Zr_{52,5}Ti₅Cu_{17,9}Ni_{14,6}Al₁₀ und Zr_{59,3}Cu_{28,8}Al_{10,4}Nb_{1,5}, wobei die Indizes Atom% der jeweiligen Elemente in der Legierung angeben. Eine weitere Gruppe von Legierungen kann beispielsweise die Elemente Zr, Al, Ni, Cu und Pd enthalten, insbesondere Zr₆₀Al₁₀Ni₁₀Cu₁₅Pd₅. Eine andere geeignete Gruppe von Legierungen enthält beispielsweise mindestens 85 Gew.-% Pt sowie Cu und Phosphor, wobei die Legierung weiterhin Co und /oder Nickel enthalten kann, beispielswiese Pt_{57.5}Cu_{14.5}Ni₅P₂₃ (Indizes in Atom%). Eine andere geeignete Gruppe von Legierungen ist eine Übergangsmetall-basierte Legierung, die Schwefel als ein Legierungselement enthält. Solche schwefelhaltigen Übergangsmetall-basierten Legierungen werden beispielsweise in EP 3 447 158 A1 beschrieben.

Das den Abschnitt mit hohem Aspektverhältnis bildende Material kann beispielsweise aus einer oder mehreren amorphen Metalllegierungen bestehen. Im Rahmen der vorliegenden Erfindung ist es allerdings auch möglich, dass der Abschnitt neben der amorphen Metalllegierung noch ein kristallines Metall (z.B. eine oder mehrere kristalline Metalllegierungen) enthält. Beispielsweise kann die amorphe Metalllegierung als Matrix fungieren, in der eine oder mehrere kristalline Metalllegierungen dispergiert sind. Auch mit diesen Kompositstrukturen kommen die vorteilhaften Eigenschaften der amorphen Metalle zum Tragen.

Wie dem Fachmann bekannt ist, zeigt eine amorphe Metalllegierung in der dynamischen Differenzkalorimetrie (DSC) einen Glasübergang sowie eine exotherme Wärmetönung beim Übergang in den kristallinen Zustand (Kristallisationsenthalpie), während in der Röntgendiffraktometrie keine scharfen Beugungsreflexe ("*Bragg-Peaks*") erkennbar sind.

Bevorzugt weist der die amorphe Metalllegierung enthaltende Abschnitt mit hohem Aspektverhältnis eine Kristallinität von weniger als 50%, bevorzugter weniger als 25%, noch bevorzugter weniger als 10% auf oder ist sogar vollständig amorph. Der kristalline Anteil wird bestimmt über DSC als das Verhältnis der Kristallisationsenthalpie des den Abschnitt bildenden Materials zur Kristallisationsenthalpie einer vollständig amorphen Referenzprobe (d.h. keine Beugungsreflexe (Bragg-Peaks) im Röntgendiffraktogramm).

Der die amorphe Metalllegierung enthaltende und ein hohes Aspektverhältnis aufweisende Abschnitt des Formkörpers ist beispielsweise ein Hohlkörper. Beliebige andere geometrische Formen sind im Rahmen der vorliegenden Erfindung aber ebenfalls möglich (z.B. stabförmig, klingenförmig oder ein Blatt eines Werkzeugs).

Die genaue Form des auf dem metallischen Substrat vorliegenden Abschnitts mit hohem Aspektverhältnis hängt von der geplanten Verwendung des Formkörpers ab. Da der Abschnitt über ein additives Fertigungsverfahren hergestellt wird, lassen sich gegebenenfalls auch komplexe Geometrien realisieren.

Beispielsweise ist der Hohlkörper ein rohrförmiger Hohlkörper. Das Rohr kann einen runden oder auch einen eckigen bzw. kantigen Querschnitt aufweisen. Andere Formen des Hohlkörpers sind im Rahmen der vorliegenden Erfindung aber auch möglich. Der Hohlkörper kann ein geschlossener oder offener Hohlkörper sein. Die Wand des Hohlkörpers kann beispielsweise massiv oder in Form einer Gitterstruktur ausgestaltet sein.

Im Fall des Hohlkörpers enthält dessen Wand die amorphe Metalllegierung.

Bevorzugt weist der die amorphe Metalllegierung enthaltende Abschnitt ein Aspektverhältnis von mindestens 10, bevorzugter mindestens 20 auf. Beispielsweise liegt das Aspektverhältnis im Bereich von 10 bis 1000, bevorzugter 20 bis 500.

Das Aspektverhältnis des auf dem Substrat vorliegenden Abschnitts des Formkörpers ergibt sich aus dem Verhältnis von der Höhe H des Abschnitts zu der minimalen Materialdicke Dₘᵢₙ des Abschnitts.

Handelt es sich bei dem Abschnitt beispielsweise um einen Hohlkörper (z.B. einen zylindrischen Hohlkörper), so ergibt sich die minimale Materialdicke aus der minimalen Wanddicke des Hohlkörpers. Der auf dem metallischen Substrat des Formkörpers aufgebrachte Hohlkörper weist also bevorzugt eine Höhe H und eine minimale Wanddicke Dₘᵢₙ auf, wobei H/Dₘᵢₙ ≥ 10, bevorzugter ≥ 20; beispielsweise 1000 ≥ H/Dₘᵢₙ ≥ 10 oder 500 ≥ H/Dₘᵢₙ ≥ 20.

Das erfindungsgemäße Verfahren ist insbesondere vorteilhaft, wenn der auf dem metallischen Substrat aufgebrachte Abschnitt mit hohem Aspektverhältnis eine relativ geringe Materialdicke aufweist.

Beispielsweise liegt die Materialdicke des die amorphe Metalllegierung enthaltenden Abschnitts mit hohem Aspektverhältnis im Bereich von 0,05 mm bis 50 mm, bevorzugter 0,05 mm bis 5 mm, noch bevorzugter 0,05 mm bis 2 mm. Handelt es sich bei dem Abschnitt um einen Hohlkörper, so beträgt dessen Wanddicke also beispielsweise 0,05 mm bis 50 mm, bevorzugter 0,05 mm bis 5 mm, noch bevorzugter 0,05 mm bis 2 mm.

Bei dem Formkörper, der mit dem erfindungsgemäßen Verfahren hergestellt wird, handelt es sich beispielsweise um den Flexspline eines Harmonic-Drive-Getriebes, einen Fräskopf oder ein Zahnrad (nicht-additiv gefertigtes metallisches Substrat) mit aufliegender rohrförmiger Buchse (additiv gefertigter Hohlkörper), ein medizinisches Besteck, ein chirurgisches Instrument (z.B. eines Skalpell) oder einer Pinzette.

## Patentansprüche

1. Ein Verfahren zur Herstellung eines metallischen Formkörpers, der Formkörper umfassend (i) ein metallisches Substrat und (ii) einen auf dem metallischen Substrat vorliegenden Abschnitt, der ein hohes Aspektverhältnis aufweist und eine amorphe Metalllegierung enthält,
wobei der die amorphe Metalllegierung enthaltende Abschnitt mit hohem Aspektverhältnis über eine additive Fertigung auf das metallische Substrat aufgebracht wird.

2. Das Verfahren nach Anspruch 1, wobei das metallische Substrat über ein nicht-additives metallurgisches Verfahren hergestellt wird

3. Das Verfahren nach Anspruch 2, wobei das nicht-additive metallurgische Verfahren ein Gießen, ein Zerspanen, ein thermoplastisches Formen oder ein pulvermetallurgisches Verfahren oder eine Kombination aus mindestens zwei dieser Verfahren ist.

4. Das Verfahren nach einem der Ansprüche 1-3, wobei das metallische Substrat ein kristallines Metall und/oder ein amorphes Metall enthält.

5. Das Verfahren nach einem der vorstehenden Ansprüche, wobei das metallische Substrat eine Platte, ein Gehäuse, ein Zahnkranz oder ein Schneidebereich eines Fräskopfes ist.

6. Das Verfahren nach einem der vorstehenden Ansprüche, wobei die additive Fertigung ein Pulverbett-basiertes Strahlschmelzen, ein Auftragsschweißen, ein Liquid-Metal-Jetting, ein Extrusionsverfahren oder ein Binder-Jetting ist.

7. Das Verfahren nach Anspruch 6, wobei das Pulverbett-basierte Strahlschmelzen ein Pulverbett-basiertes Laser- oder Elektronenstrahlschmelzen ist.

8. Das Verfahren nach einem der vorstehenden Ansprüche, wobei der die amorphe Metalllegierung enthaltende Abschnitt mit hohem Aspektverhältnis ein Aspektverhältnis von mindestens 10 aufweist.

9. Das Verfahren nach einem der vorstehenden Ansprüche, wobei der die amorphe Metalllegierung enthaltende Abschnitt mit hohem Aspektverhältnis eine Materialdicke im Bereich von 0,05 mm bis 50 mm aufweist.

10. Das Verfahren nach einem der vorstehenden Ansprüche, wobei der die amorphe Metalllegierung enthaltende Abschnitt mit hohem Aspektverhältnis ein Hohlkörper, insbesondere ein rohrförmiger Hohlkörper; ein stabförmiger Abschnitt oder ein Blatt oder eine Klinge eines Werkzeugs ist.

11. Das Verfahren nach einem der vorstehenden Ansprüche, wobei die in dem Abschnitt mit hohem Aspektverhältnis vorliegende amorphe Metalllegierung eine Übergangsmetall-basierte Legierung, eine Al-basierte Legierung oder eine Mg-basierte Legierung ist.

12. Das Verfahren nach einem der vorstehenden Ansprüche, wobei der Formkörper ein Flexspline eines Harmonic-Drive-Getriebes, ein Fräskopf oder ein Zahnrad mit aufliegender rohrförmiger Buchse, ein medizinisches Besteck, ein chirurgisches Instrument oder einer Pinzette ist.
